# EUROPÄISCHE PATENTSCHRIFT

(11) **EP 3 490 878 B1**
(45) Veröffentlichungstag und Bekanntmachung des Hinweises auf die Patenterteilung: **09.06.2021**
(21) Anmeldenummer: 18750395.8
(22) Anmeldetag: 31.07.2018
(51) Int. Cl.: B62J 43/10, B62K 7/04, B62H 1/12, B62K 3/00, B62K 5/007

(54) **ELEKTROMOTORISCH ANGETRIEBENES STEHFAHRZEUG FÜR EINEN PERSONENTRANSPORT UND VERFAHREN**
ELECTRIC DRIVEN STANDING VEHICLE FOR PERSONAL TRANSPORT AND METHOD
VÉHICULE DE DIRECTION ÉLECTRIQUE POUR TRANSPORT DE PASSAGERS ET PROCÉDÉ

(30) Priorität: 18.10.2017 DE 102017218568; 18.10.2017 DE 202017006790 U
(43) Veröffentlichungstag der Anmeldung: 05.06.2019
(73) Patentinhaber: Bayerische Motoren Werke Aktiengesellschaft, 80809 München (DE)
(72) Erfinder: AUGUSTIN, Stephan, 80804 München (DE); DAUDE, Rainer, 8534 Freising (DE)
(86) Internationale Anmeldenummer: PCT/EP2018/070794
(87) Internationale Veröffentlichungsnummer: WO 2019/076505

(56) Entgegenhaltungen:
- CN-A- 102 050 182
- CN-A- 106 828 736
- DE-A1- 1 923 341
- DE-U1- 20 215 643
- GB-A- 477 411
- GB-A- 704 317
- GB-A- 2 219 559
- GB-A- 2 491 136
- US-A- 3 416 625
- US-A- 6 095 267
- US-A1- 2014 305 720

## Beschreibung

Die Erfindung betrifft ein elektromotorisch angetriebenes Stehfahrzeug für einen Personentransport mit einem elektrischen Antriebsmotor und mit einer Stehplattform. Die Erfindung betrifft weiterhin ein Verfahren zum Betrieb eines derartigen Stehfahrzeugs.

Stehfahrzeuge der eingangsgenannten Art sind vergleichsweise einfache Transportmittel, welche gleichzeitig mit Hindernissen und Menschenansammlungen verträglich sind. Derartige Stehfahrzeuge werden insbesondere auf ebenen, befestigten Flächen zur Fortbewegung oder zum Transport von Personen genutzt, und weisen in der Regel zwei oder drei Räder auf. Aufgrund der einfachen Handhabung und flexiblen Einsatzmöglichkeiten sowie dem vergleichsweise geringen Platzbedarf werden derartige Stehfahrzeuge häufig zum Personentransport in weitläufigen Geländen oder Gebäudekomplexen, wie beispielsweise einer Werkshalle oder einem Flughafen, zur Reduzierung von Gehzeiten eingesetzt.

Bei derartigen Stehfahrzeugen steht ein Benutzer während der Fahrt in der Regel aufrecht auf einer Standfläche einer parallel zu einem Untergrund orientierten Stehplattform. Die Stehplattform ist hierbei in der Regel flach angeordnet. Dies bedeutet, dass die Stehplattform lediglich einen geringen Abstand zum Untergrund aufweist. Dadurch weist das Stehfahrzeug im Betrieb aufgrund des aufrecht stehenden Benutzers einen vergleichsweise hohen Schwerpunkt auf, welcher in der Regel oberhalb der Stehplattform angeordnet ist. Somit besteht im Betrieb eine gewisse Kipp- und somit Unfallgefahr.

Aus der US 2002/005309 A1 ist ein elektromotorisches Stehfahrzeug mit einem freistehenden, lenkbaren Vorderrad und mit einem elektromotorisch angetrieben Hinterrad bekannt. Ein derartiges zweirädriges Stehfahrzeug weist jedoch eine reduzierte Standfläche sowie eine vergleichsweise hohe Kippgefahr auf. Dadurch besteht bei einem Einsatz eines solchen Stehfahrzeugs in Werkshallen oder Flughäfen bei Hindernissen, wie Schienen oder Schwellen, eine erhöhte Unfallgefahr.

Aus der US 2015/0166138 A1 ist ein elektromotorisches Stehfahrzeug mit zwei freistehenden, lenkbaren und elektromotorisch angetriebenen Vorderrädern und einem Hinterrad bekannt. Derartige dreirädrige Anordnungen weisen jedoch bei engen Kurvenfahrten und Fahrten auf geneigten Oberflächen nachteiligerweise eine Anfälligkeit zum Kippen und somit eine erhöhte Unfallgefahr auf.

Die US 6,390,216 B1 beschreibt ein elektromotorisches Stehfahrzeug mit einem freistehenden, lenkbaren Vorderrad und zwei elektromotorisch angetrieben Hinterrädern. Zwischen den Hinterrädern ist eine Stehplattform als schmale Standfläche für einen Benutzer vorgesehen, wobei zwischen der Standfläche und einem Lenker des Vorderrads eine Halterung für einen Golfsack vorgesehen ist. Dadurch weist das bekannte Stehfahrzeug lediglich eine geringe Standfläche für den Benutzer auf.

In der CN 106 828 736 A ist ein Wagen zum Transport von Büchern beschrieben. An einer dem Untergrund zugewandten Seite sind zwei Vorderräder sowie zwei mittels eines Motors angetriebenen Antriebsrädern angeordnet. Weiterhin umfasst der Wagen ein lenkbares Hinterrad, welches mit einer Lenkerstange gekoppelt ist, wobei die Lenkerstange in einer Aussparung der Bodenplatte aufgenommen ist.

Aus der US 3 416 625 A ist ein gattungsgemäßes elektrisch angetriebenes Fahrzeug bekannt. Dieses weist ein lenkbares und angetriebenes Vorderrad sowie zwei am Rahmen angeordnete Hinterräder auf. Ferner weist das Fahrzeug eine Stoßstange auf, an welcher Stützräder montiert sind.

In der GB 2 219 559A ist ein Rollstuhl mit einem lenkbaren Vorderrad offenbart. Weiterhin weist der Rollstuhl zur Vermeidung eines Sturzes bei einer Kurvenfahrt ein Stabilisierungssystem mit Stützrädern auf, welche an einem vorderen Ende eines Rahmens des Rollstuhls montiert sind, wobei die Stützräder normalerweise über dem Untergrund angeordnet sind.

Die GB 2 491 136 A offenbart ein dreirädriges Stehfahrzeug mit einer Stehplattform und mit zwei elektromotorisch angetriebenen Hinterrädern sowie mit einem Vorderrad, welches mittels einer Lenkerstange um 360° verschwenkbar ist. Die Hinterräder weisen jeweils einen steuerbaren Elektromotor als Antrieb auf, wobei eine Anti-Kipp-Elektronik vorgesehen ist, welche die Elektromotoren anhand eines erfassten Kippwinkels des Stehfahrzeugs ansteuert.

Der Erfindung liegt die Aufgabe zugrunde, ein besonders betriebssicheres und für Personen- und Lastentransport geeignetes elektromotorisches Stehfahrzeug anzugeben. Insbesondere soll ein besonders kippsicheres und betriebssicheres Stehfahrzeug angegeben werden, welches insbesondere für den Einsatz in einem weitläufigen Gebäudekomplex oder einem Gelände zur Reduzierung von Gehzeiten geeignet ist. Der Erfindung liegt weiterhin die Aufgabe zugrunde, ein geeignetes Verfahren zum Betrieb eines derartigen Stehfahrzeugs anzugeben.

Hinsichtlich des Stehfahrzeugs wird die Aufgabe mit den Merkmalen des Anspruchs 1 und hinsichtlich des Verfahrens mit den Merkmalen des Anspruchs 13 erfindungsgemäß gelöst. Vorteilhafte Ausgestaltungen und Weiterbildungen sind Gegenstand der jeweiligen Unteransprüche.

Das erfindungsgemäße elektromotorisch angetriebene Stehfahrzeug ist für einen Personentransport, insbesondere in einem weitläufigen Gebäudekomplex oder einem weitläufigen Gelände, geeignet und eingerichtet.

Das Stehfahrzeug weist einen elektrischen Antriebsmotor und eine Stehplattform auf. Die Stehplattform ist etwa parallel zu einem Untergrund angeordnet und weist eine zum Untergrund orientierte Unterseite sowie eine dieser gegenüberliegend angeordneten Oberseite auf. Die Oberseite ist hierbei zweckmäßigerweise als eine Standfläche für einen Benutzer ausgebildet. Die Standfläche weist beispielsweise Mittel zur verbesserten Standsicherheit, wie beispielsweise ein mattenartiges Gummiprofil oder dergleichen auf.

Entlang einer Mittelachse der Stehplattform ist ein lenkbares Vorderrad angeordnet. Das Vorderrad ist mit einer Lenkerstange (Lenksäule) mit einem Lenker gekoppelt, und mittels dieser um eine durch die Lenkerstange gebildeten Drehachse verschwenkbar. Zur Kopplung der Lenkerstange mit dem Vorderrad weist die Lenkerstange geeigneterweise eine Radgabel auf, welche vorzugsweise mit einer Dämpfung oder Federung zur Verbesserung des Bodenkontakts und des Benutzerkomforts versehen ist.

Zum Vorderrad beabstandet sind zwei Hinterräder an der Stehplattform angeordnet, welche jeweils seitlich zur Mittelachse versetzt sind. Das Vorderrad und die Hinterräder bilden hierbei geeigneterweise die Ecken eines gleichschenkeligen Dreiecks, wobei die Mittelachse die Symmetrieachse bildet.

In die Stehplattform ist eine umfangsseitig vollständig geschlossene, Durchführöffnung eingebracht. Die Durchführöffnung ist hierbei beispielsweise als eine kreisrunde, lochartige Aussparung in die Stehplattform eingebracht. Im Betrieb des Stehfahrzeugs sitzt das Vorderrad in der Durchführöffnung ein.

Das Vorderrad ist beidseitig von jeweils mindestens einem Stützelement flankiert. Das oder jedes Stützelement steht hierbei der Unterseite der Stehplattform etwa senkrecht empor.

Im Gegensatz zum Stand der Technik ist das Vorderrad beziehungsweise die Lenkerstange nicht freistehend an der Stehplattform angeordnet, sondern insbesondere in diese zumindest teilweise eingelassen. Durch die Durchgangsöffnung ist das zentrale Vorderrad beziehungsweise die Lenkerstange von der umgebenden Stehplatte geschützt, sodass bei einem Anprall an einem Hindernis die auftretenden Kräfte nicht auf das Vorderrad und/oder die Lenkerstange einwirken. Mit anderen Worten wirken die Kräfte bei einem Anprall an einem Hindernis insbesondere auf eine Vorderkante der Stehplattform. Dadurch wird die Standsicherheit eines Benutzers bei einem Anprall verbessert, sodass ein besonders sicherer Betrieb des Stehfahrzeugs gewährleistet ist.

Das Vorderrad und die beiden Hinterräder tragen die Stehplattform und befinden sich im Betrieb des Stehfahrzeugs im Wesentlichen zu jedem Zeitpunkt der Fahrt in einem Berührungskontakt mit dem Untergrund. Die Stützelemente weisen zweckmäßigerweise eine im Vergleich zu den Vorder- und Hinterrädern geringere axiale Höhe an der Unterseite auf. Mit anderen Worten berühren die Stützelemente bei einer aufrechten Fahrt auf einem ebenen Untergrund diesen nicht. Dies bedeutet, dass die Stützelemente im Wesentlichen in einem lichten Abstand zum Untergrund angeordnet sind. Tritt ein gewisser Grad an seitlicher Neigung der Stehplattform auf, wie es beispielsweise bei einer Kurvenfahrt möglich ist, berührt das Stützelement an der geneigten Stehplattformseite, also an der der Kurve zugewandten Längsseite, den Untergrund. Dadurch wird die Stehplattform seitlich abgestützt. Somit wird mittels der Stützelemente die Gefahr eines seitlichen (Um-)Kippens im Wesentlichen vollständig behoben oder zumindest wesentlich reduziert. Dadurch weist das Stehfahrzeug im Vergleich zum Stand der Technik eine verbesserte Kippsicherheit oder Kippstabilität auf.

Dadurch ist ein besonders geeignetes elektromotorisches Stehfahrzeug realisiert. Insbesondere ist somit ein gewichtsarmes, flexibles Stehfahrzeug für den Personentransport realisiert, welches eine verringerte Unfallgefahr und somit eine erhöhte Arbeitssicherheit aufweist. Das Stehfahrzeug ermöglicht somit eine verbesserte Logistik und eine betriebssichere Reduzierung von Gehzeiten bei weitläufigen Geländen oder Gebäudekomplexen, wie beispielsweise Werkshallen und Werksgeländen sowie Flughäfen.

Durch die Stützelemente ist eine im Vergleich zum Stand der Technik verbreiterte oder großflächigere Stehplattform ermöglicht. Die somit vergrößerte Stehplattform ermöglicht neben einer komfortablen Standfläche für den Benutzer eine zusätzliche Standfläche für einen weiteren Benutzer und/oder eine Stand- oder Abstellfläche für einen stabilen und betriebssicheren Transport von Gegenständen, wie beispielsweise Waren, Taschen und sonstigem Gepäck. Dadurch wird die Flexibilität des Stehfahrzeugs vorteilhaft erhöht.

Im Nachfolgenden sind Angaben hinsichtlich der Raumrichtungen insbesondere bezüglich eines Koordinatensystems des Stehfahrzeugs (Fahrzeugkoordinatensystem) angegeben.

Die Abszissenachse (X-Achse) ist parallel zu einer Fahrzeuglängsrichtung entlang der Mittelachse von den Hinterrädern zu dem Vorderrad orientiert. Die hierzu senkrechte Ordinatenachse (Y-Achse) erstreckt sich in Fahrzeugquerrichtung und ist parallel zur Verbindungslinie der Hinterräder orientiert. Die im Wesentlichen horizontal orientierte Stehplattform ist hierbei in der durch die Abszissen- und Ordinatenachse aufgespannten Ebene (XY-Ebene) angeordnet. Die Applikatenachse (Z-Achse) ist hierbei senkrecht zur Stehplattform orientiert. Im Betrieb des Stehfahrzeugs ist die Lenkerstange insbesondere etwa parallel zur Applikatenachse orientiert.

Die dem Vorderrad zugewandte Querseite der Stehplattform ist nachfolgend insbesondere als Vorderseite oder Vorderkante bezeichnet, wobei die gegenüberliegend angeordnete und den Hinterrädern zugewandte Querseite der Stehplattform entsprechend als Hinterseite oder Hinterkante bezeichnet ist. Die Längsseiten der Stehplattform sind nachfolgend auch als Seitenkanten bezeichnet.

In einer vorteilhaften Ausführung ist das oder jedes Stützelement jeweils seitlich außerhalb einer zwischen dem Vorderrad und dem jeweiligen Hinterrad verlaufenden Kipplinie an der Unterseite positioniert. Die Kipplinie entspricht hierbei einer Kippachse, um welche das Stehfahrzeug bei einer seitlichen Neigung kippen würde. Die Stützelemente sind bezogen auf die Mittelachse radial außerhalb der beiden Kipplinien angeordnet, sodass die Stehplattform und somit das Stehfahrzeug bei einer seitlichen Neigung zuverlässig seitlich abgestützt wird. Dadurch ist eine besonders hohe Kippsicherheit des Stehfahrzeugs erreicht.

In einer geeigneten Ausführungsform sind die Stützelemente hierbei im Bereich des zentralen Vorderrads beziehungsweise im vorderen Bereich der Stehplattform angeordnet. Durch die beabstandeten Hinterräder im hinteren Bereich der Stehplattform und die vorderseitig beabstandet angeordneten Stützelemente neben dem Vorderrad ist ein besonders hoher und zuverlässiger Kippschutz des Stehfahrzeugs realisiert.

Die Stützelemente sind als Stützräder ausgebildet. Die Stützräder sind hierbei vorzugsweise frei schwenkbar am vorderen Ende der Stehplattform angeordnet. Dadurch sind besonders geeignete und zweckmäßige Stützelemente realisiert, welche besonders flexibel auf einem jeweiligen Untergrund abstützen können.

In einer möglichen Weiterbildung sind die Stützelemente entlang der Mittelachse zu den Hinterrädern hin versetzt hinter dem Vorderrad angeordnet. Dadurch wird der Einsatz des Stehfahrzeugs im Bereich von Stufen und Schwellen vorteilhaft vereinfacht, da somit bei einem Überfahren der Stufe oder der Schwelle zuerst das Vorderrad an diese herangeführt wird. Gleichzeitig ist weiterhin ein hoher Kippschutz gewährleistet, sodass ein besonders einfaches und sicheres Überfahren von Schwellen und Stufen möglich ist.

In einer zweckmäßigen Ausgestaltung ist das Vorderrad mittels des Antriebsmotors angetrieben. Dadurch ist ein besonders zweckmäßiger Antrieb des Stehfahrzeugs realisiert. Hierbei ist es beispielsweise denkbar, dass der Lenker mit einem Drehgriff zur einfachen Steuerung der Motorleistung und somit der Fahrzeuggeschwindigkeit versehen ist. Somit wird keine weitere Kupplung oder Gangschaltung benötigt.

In einer vorteilhaften Ausführung ist der Antriebsmotor als ein Radnabenmotor des Vorderrads ausgebildet. Mit anderen Worten ist der Elektro- oder Antriebsmotor direkt in dem Vorderrad des Stehfahrzeugs eingebaut oder integriert. Dadurch ist ein besonders zweckmäßiger und bauraumkompakter Antriebsmotor realisiert.

In einer besonders bevorzugten Ausgestaltung ist das innerhalb der Durchgangsöffnung angeordnete Vorderrad mittels des Lenkers um 360° verschwenkbar. Mit anderen Worten ist durch den Lenker und die Lenkerstange ein im Wesentlichen unbegrenzter Lenkwinkel für das Vorderrad realisiert. Dadurch wird einerseits eine größtmögliche Wendigkeit des Stehfahrzeugs gewährleistet. Andererseits ist es somit insbesondere möglich, dass das Stehfahrzeug auch ohne Schaltung rückwärts bewegt werden kann, also die Fahrt- oder Bewegungsrichtung umgedreht wird, indem der Lenker - und somit das Vorderrad - um 180° verschwenkt wird. Somit ist ein besonders geeignetes Stehfahrzeug realisiert.

In einer zweckmäßigen Weiterbildung ist eine Fahrzeugbatterie zur Energieversorgung des Antriebsmotors in die Lenkerstange integriert. Die beispielsweise als Akkumulator ausgeführte Fahrzeugbatterie ist somit besonders platzsparend am Stehfahrzeug angeordnet, sodass beispielsweise zusätzlicher Bauraum im Bereich der Stehplattform bewirkt wird. Die Integrierung der Fahrzeugbatterie in die Lenkerstange ist hierbei insbesondere bei einer Weiterbildungsform mit einem als Radnabenmotor ausgeführten Antriebsmotor des Vorderrads vorteilhaft, da somit eine besonders einfache und materialsparende Kabelführung realisiert ist.

In einer alternativen Weiterbildungsform ist die Fahrzeugbatterie beispielsweise in der Stehplattform integriert.

In einer geeigneten Ausbildung ist die Lenkerstange verschwenkbar gegenüber der Stehplattform. Mit anderen Worten ist die Lenkerstange klappbar an der Stehplattform befestigt, sodass bei Bedarf das Stehfahrzeug bauraumkompakt zusammengeklappt werden kann. Hierzu wird die Lenkerstange um eine Schwenkachse verschwenkt, welche im Wesentlichen parallel zu der Ordinatenachse des Stehfahrzeugs orientiert ist. Dadurch sind ein besonders bauraumkompakter Transport und/oder eine bauraumkompakte Lagerung des Stehfahrzeugs möglich. In einer geeigneten Ausbildungsform sind somit insbesondere die Lenkerstange und der Antriebsmotor gemeinsam verschwenkbar.

Ein zusätzlicher oder weiterer Aspekt der Erfindung betrifft ein Verfahren zum Betrieb eines elektromotorischen Stehfahrzeugs.

Verfahrensgemäß wird ein Verschwenkwinkel des Vorderrads um die Drehachse, insbesondere um die Lenkerstange, erfasst. Mit anderen Worten wird ein Lenkwinkel des Stehfahrzeugs erfasst. Hierzu sind beispielsweise Drehwinkelsensoren in die Lenkerstange integriert.

Verfahrensgemäß werden ein Drehmoment und/oder die Drehzahl des Antriebsmotors, also die Motorleistung, zur Steuerung der Fahrzeuggeschwindigkeit in Abhängigkeit des erfassten Verschwenkwinkels eingestellt.

Durch das erfindungsgemäße Verfahren wird somit eine verschwenk- oder lenkwinkelabhängige Begrenzung des Drehmoments und der Fahrzeuggeschwindigkeit realisiert. Bei einem zunehmend größeren Lenkwinkel wird somit die Motorleistung und dadurch die Fahrzeuggeschwindigkeit sukzessive oder stufenweise reduziert, sodass eine Unfallgefahr aufgrund einer fehlerhaften Benutzung vorteilhaft und auf einfache Art und Weise vermieden wird. Dadurch wird das Stehfahrzeug beispielsweise bei einer engen Kurvenfahrt - und entsprechend großem Lenkwinkel - selbsttätig oder automatisch abgebremst, sodass eine Kipp- oder Unfallgefahr zuverlässig reduziert wird.

Das Verfahren ist hierbei insbesondere für ein vorstehend beschriebenes Stehfahrzeug mit einem 360°-verschwenkbaren Vorderrad geeignet. Durch das Verfahren wird im Zuge eines Rückwärtsfahrens, bei welchem das Vorderrad insbesondere um 180° verschwenkt ist, automatisch auf ein niedriges Motordrehmoment gesteuert und/oder geregelt. Dadurch wird einem ungewünschten zu schnellen Anfahren oder Beschleunigen entgegengewirkt, wodurch der Benutzerkomfort sowie die Benutzersicherheit verbessert werden.

Vorteilhafterweise weist das Stehfahrzeug hierbei einen Controller, also ein Steuergerät, auf, welcher/s zur Durchführung des vorstehend beschriebenen Verfahrens geeignet und eingerichtet ist.

Der Controller ist hierbei allgemein programm- und/oder schaltungstechnisch zur Durchführung des vorstehend beschriebenen erfindungsgemäßen Verfahrens eingerichtet. Der Controller ist somit konkret dazu eingerichtet, mittels eines Sensors den Verschwenk- oder Lenkwinkel des Stehfahrzeugs zu erfassen, und anhand des erfassten Winkels das Motordrehmoment und/oder die Motordrehzahl des Antriebsmotors einzustellen.

In bevorzugter Ausgestaltung ist der Controller zumindest im Kern durch einen Microcontroller mit einem Prozessor und mit einem Datenspeicher gebildet, in dem die Funktionalität zur Durchführung des erfindungsgemäßen Verfahrens in Form einer Betriebssoftware (Firmware) programmtechnisch implementiert ist, sodass das Verfahren - gegebenenfalls in Interaktion mit einem Kraftfahrzeugnutzer - bei Ausführung der Betriebssoftware in dem Microcontroller automatisch durchgeführt wird.

Der Controller kann im Rahmen der Erfindung alternativ aber auch durch ein nicht programmierbares elektronisches Bauteil, z.B. einen anwendungsspezifischen Schaltkreis (ASIC), gebildet sein, in dem die Funktionalität zur Durchführung des erfindungsgemäßen Verfahrens mit schaltungstechnischen Mitteln implementiert ist.

In einer möglichen Ausführungsform ist es beispielsweise denkbar, dass der Controller Teil einer den Elektro- oder Antriebsmotor steuernden und/oder regelnden Motorelektronik ist.

In einer denkbaren Weiterbildungsform weist der Controller beispielsweise eine Schnittstelle zur insbesondere drahtlosen signaltechnischen Kopplung mit einem Smart Device, wie beispielsweise einem Smartphone oder einem Tabletcomputer, auf. Insbesondere ist hierbei ein Positionssensor, wie beispielsweise ein GPS (Global Positioning System) oder ein WLAN basierter Sensor vorgesehen, welcher die Position des Stehfahrzeugs auf einem Gelände oder innerhalb eines Gebäudekomplexes erfasst.

Hierbei ist es beispielsweise denkbar, dass innerhalb des Geländes oder Gebäudekomplexes unterschiedliche Bereiche oder Zonen bestimmt werden, denen ein jeweiliger maximaler Geschwindigkeitswert zugeordnet ist. Diese jeweiligen Geschwindigkeitswerte sind hierbei beispielsweise in einem Speicher des Controllers hinterlegt, wobei das maximale Drehmoment, und somit die maximale Fahrzeuggeschwindigkeit, mittels des Positionssensors in Abhängigkeit des Bereichs oder der Zone geregelt wird, in dem sich das Stehfahrzeug aktuell befindet. Mit anderen Worten kann ein Benutzer in einer solchen (Geschwindigkeits-)Zone lediglich mit einer vorgegeben Maximal- oder Höchstgeschwindigkeit fahren. Dadurch ist es beispielsweise möglich, in Bereich von Kreuzungen, unübersichtlichen Stellen oder Ladezonen eine automatische Geschwindigkeitsreduzierung des Stehfahrzeugs zu bewirken. Beispielsweise wird hierbei die maximale Fahrzeuggeschwindigkeit von 20 km/h auf 6 km/h reduziert. Durch diese Weiterbildungsform mit Geschwindigkeitszonen wird die Unfallgefahr wesentlich reduziert und somit eine ungewünschte Geschwindigkeitsüberschreitung des Benutzers vermieden.

In einer ebenso denkbaren Weiterbildungsform weist das Stehfahrzeug zusätzlich oder alternativ Umgebungssensoren, wie beispielsweise optische Kameras oder Näherungssensoren, zur Erfassung der Fahrzeugumgebung auf. Die Umgebungssensoren sind hierbei beispielsweise derart mit dem Controller gekoppelt, dass dieser die Fahrzeuggeschwindigkeit und/oder die Bewegungs- beziehungsweise Lenkrichtung in Abhängigkeit der Sensorsignale steuert. Dadurch ist es beispielsweise denkbar, dass das Stehfahrzeug mit Fahrtunterstützungssystemen, zum Beispiel mit einem Spurhaltesystem oder dergleichen, ausgestattet ist. Insbesondere ist das Stehfahrzeug für ein selbsttätiges oder automatisches Fahren auf dem Gelände oder in dem Gebäudekomplex geeignet und eingerichtet. Durch ein solches autonom bewegbares Stehfahrzeug ist es beispielsweise möglich, dass das Stehfahrzeug selbstständig zu häufig genutzten Orten, wie beispielsweise einer Ladestation zur Aufladung des elektrischen Energiespeichers, oder einem Werkseingang, fährt. Dadurch wird der Benutzerkomfort weiter verbessert.

Nachfolgend sind Ausführungsbeispiele der Erfindung anhand einer Zeichnung näher erläutert. Darin zeigen:
- Fig. 1: in perspektivischer Darstellung ein elektromotorisches Stehfahrzeug,
- Fig. 2: in perspektivischer Darstellung das Stehfahrzeug mit Blick auf eine (Fahrzeug-)Unterseite,
- Fig. 3: in schematischer Draufsicht die Unterseite des Stehfahrzeugs,
- Fig. 4: in perspektivischer Darstellung das Stehfahrzeug mit Blick auf eine Vorderseite,
- Fig. 5: das Stehfahrzeug in schematischer Seitendarstellung, und
- Fig. 6: in schematischer Draufsicht die Unterseite des Stehfahrzeugs in einer alternativen Ausführungsform.

Einander entsprechende Teile und Größen sind in allen Figuren stets mit den gleichen Bezugszeichen versehen.

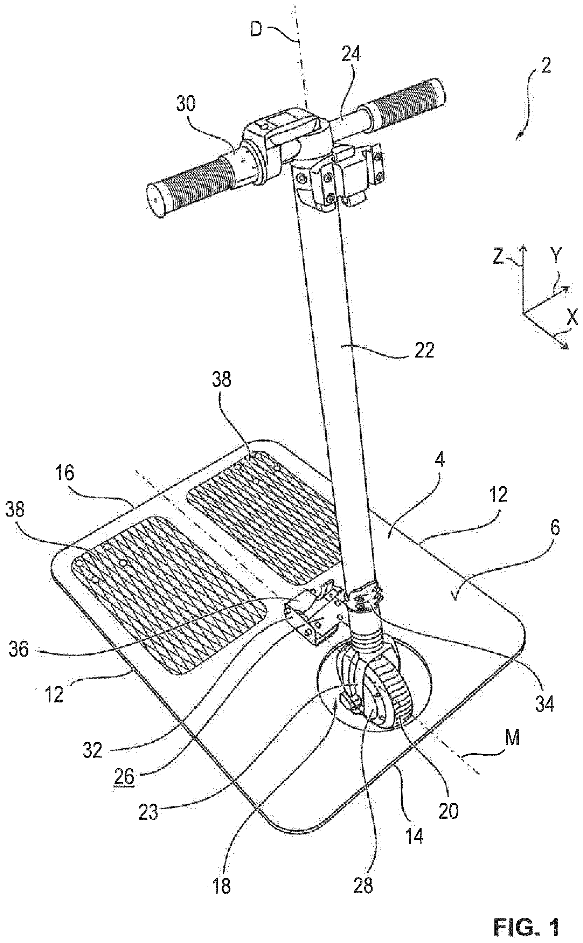

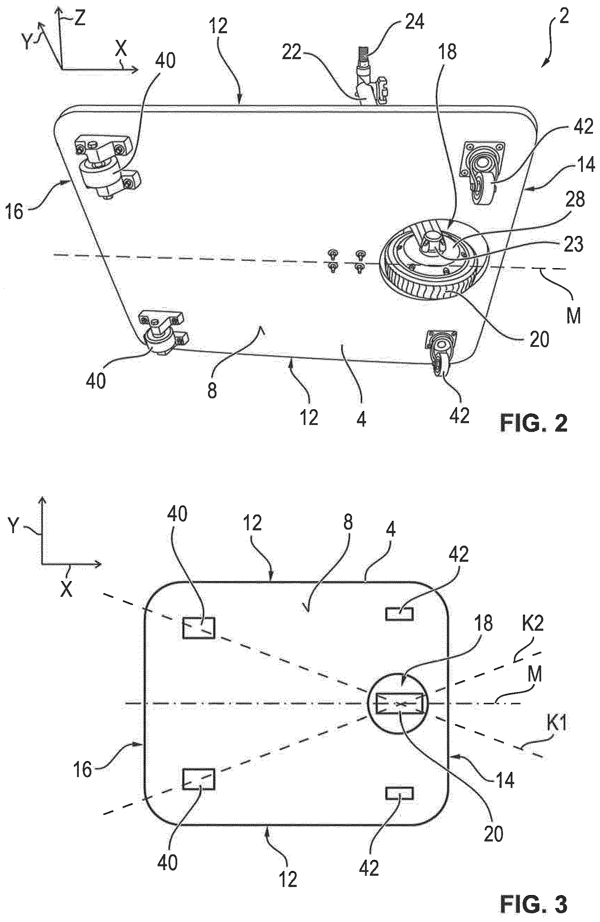

Das in der Fig. 1 dargestellte elektromotorische Stehfahrzeug 2 ist für einen Personentransport, insbesondere auf einem weitläufigen Gelände oder einem weitläufigen Gebäudekomplex, wie beispielsweise einem Flughafen oder einer Werkhalle, geeignet und eingerichtet. Das Stehfahrzeug 2 weist hierbei eine großflächige Stehplattform 4 mit einer Oberseite 6 und mit einer gegenüberliegend angeordneten Unterseite 8 (Fig. 2) auf.

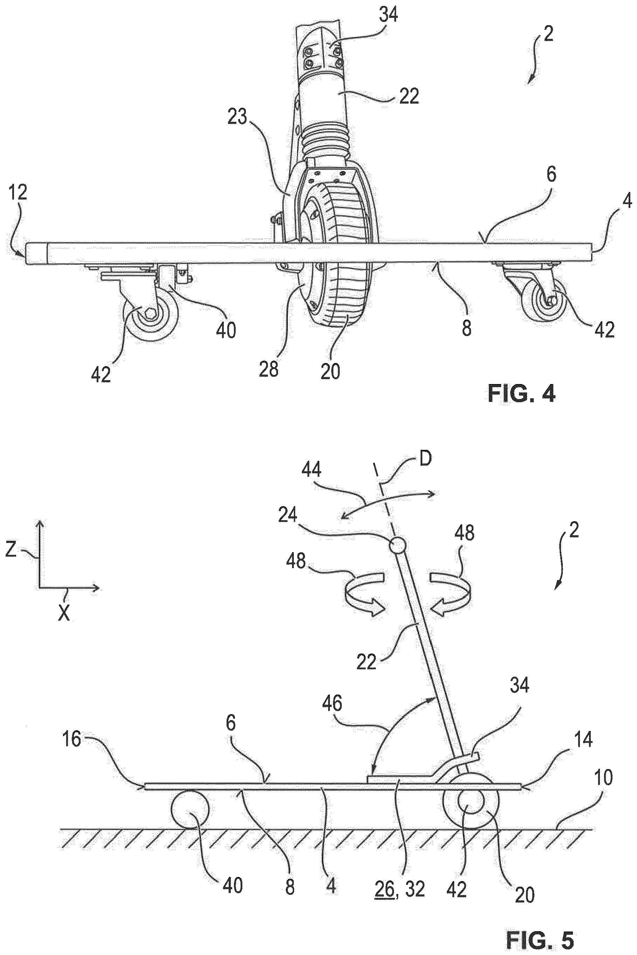

Die in diesem Ausführungsbeispiel etwa rechteckige Stehplattform 4 ist etwa parallel und flach zu einem Untergrund 10 (Fig. 5) angeordnet. Die Unterseite 8 der Stehplattform 4 ist hierbei dem Untergrund 10 zugewandt. Die Stehplattform 4 weist zwei Längsseiten oder Seitenkanten 12 sowie zwei hierzu senkrecht orientierte Querseiten 14 und 16 auf. Die Querseiten 14, 16 weisen hierbei eine im Vergleich zu den Längsseiten 12 reduzierte Länge auf. Die vorderseitige Querseite 14 des Stehfahrzeugs 2 ist nachfolgend auch als Vorderseite oder Vorderkante 14 bezeichnet. Die hierzu gegenüberliegend angeordnete Querseite 16 ist entsprechend auch als Hinterseite oder Hinterkante 16 bezeichnet.

Im Nachfolgenden sind Angaben hinsichtlich der Raumrichtungen insbesondere in einem Koordinatensystem des Stehfahrzeugs (Fahrzeugkoordinatensystem) angegeben.

Die Abszissenachse X ist parallel zu einer Fahrzeuglängsrichtung, also parallel zu den Längsseiten orientiert und verläuft von der Hinterkante 16 zur Vorderkante 14. Die hierzu senkrechte Ordinatenachse Y erstreckt sich in Fahrzeugquerrichtung und ist parallel zu den Querseiten 14 und 16 orientiert. Die Applikatenachse Z ist hierbei senkrecht zur Stehplattform 4 orientiert.

Die Stehplattform 4 weist eine parallel zu den Längsseiten 12 verlaufende Mittelachse M als Symmetrieachse auf. Im Bereich der Vorderkante 14 ist eine umfangsseitig vollständig geschlossene Durchführöffnung 18 in die Stehplattform 4 eingebracht. Die etwa kreisrunde Durchführöffnung 18 ist auf der Mittelachse M angeordnet und als eine etwa lochartige Aussparung in die Stehplattform 4 eingebracht.

In dem Ausführungsbeispiel der Fig. 1 ist ein Vorderrad 20 des Stehfahrzeugs 2 innerhalb der Durchführöffnung 18 angeordnet. Das Vorderrad 20 sitzt hierbei insbesondere derart in der Durchführöffnung 18 ein, dass das Vorderrad 20 zumindest teilweise sowohl der Oberseite 6 als auch der Unterseite 8 der Stehplattform 4 emporsteht.

Das Vorderrad 20 des Stehfahrzeugs 2 ist somit nicht freistehend an der Stehplattform 4 angeordnet, sondern in die Stehplattform 4 selbst eingelassen. Durch die Durchgangsöffnung 18 ist das zentrale Vorderrad 20 durch die umgebende Stehplatte 4 geschützt, sodass bei einem Anprall an einem Hindernis die auftretenden Kräfte insbesondere nicht auf das Vorderrad 20 einwirken. Dadurch wird die Standsicherheit eines Benutzers bei einem Anprall verbessert, sodass ein besonders sicherer Betrieb des Stehfahrzeugs 2 gewährleistet ist.

Das Vorderrad 20 ist mechanisch mit einer Lenkerstange (Lenksäule) 22 gekoppelt. Hierzu weist die Lenkerstange 22 eine gefederte oder gedämpfte Radgabel 23 auf, mittels welcher das Vorderrad 20 drehbar eingefasst ist. Die Lenkerstange 22 ist hierbei an einem dem Vorderrad 20 gegenüberliegenden (Stangen-)Ende mit einem Lenker 24 versehen. Im Bereich der Radgabel 23, also an einem dem Vorderrad 20 zugewandten (Stangen-)Ende, ist die Lenkerstange 22 mittels einer Halterung 26 an der Oberseite 6 der Stehplattform 4 befestigt. Die Lenkerstange 22 ist hierbei mittels der Halterung 26 drehbar gelagert, sodass durch ein Verschwenken des Lenkers 24 um eine durch die Lenkerstange 22 gebildete Drehachse D, das Vorderrad 20 um einen entsprechenden Verschwenk- oder Lenkwinkel mit verschwenkt oder geführt wird.

Das Vorderrad 20 ist mittels eines elektrischen Antriebs- oder Elektromotors 28 angetrieben oder antreibbar. Der Antriebsmotor 28 ist hierbei als ein Radnabenmotor ausgeführt, und als solcher zumindest teilweise in das Vorderrad 20 des Stehfahrzeugs 2 integriert. In dem Ausführungsbeispiel der Fig. 1 ist eine nicht näher dargestellte Fahrzeugbatterie in Form eines Akkumulators in der Lenkerstange 22 integriert. Der Lenker 24 weist einen Drehgriff 30 zur Steuerung und Einstellung der Motorleistung (Drehmoment, Drehzahl) und somit der Fahrzeuggeschwindigkeit auf.

Die Lenkerstange 22 und somit das Vorderrad 20 sowie der Lenker 24 sind mittels der Halterung 26 verschwenkbar gegenüber der Stehplattform 4 gehalten. Die Halterung 26 weist hierbei eine starr an der Stehplattform 4 befestigte Befestigungsplatte 32 mit einem gegenüber dieser verschwenkbaren Haltearm 34 auf, welcher die Lenkerstange 22 formschlüssig umgreift oder einfasst.

Der Haltearm 34 ist mittels eines Fußpedals 36 lösbar in der in Fig. 1 dargestellten aufrechten Position der Lenkerstange 22 arretierbar. Bei einer Betätigung des Fußpedals 36 wird die Arretierung gelöst, wodurch der Haltearm 34 derart gegenüber der Befestigungsplatte 32 verschwenkbar oder kippbar ist, dass die Lenkerstange 22 im Wesentlichen flach entlang der Mittelachse M auf der Oberseite 6 der Stehplattform 4 positionierbar ist. Dadurch sind ein besonders bauraumkompakter Transport und/oder eine bauraumkompakte Lagerung des Stehfahrzeugs 2 möglich.

Im Bereich der Hinterkante 16 weist die nachfolgend auch als Standfläche bezeichnete Oberseite 6 zwei rechteckige Fußmatten 38 auf. Im Betrieb platziert ein Benutzer hierbei vorzugsweise jeweils einen seiner Füße auf jeweils einer der Fußmatten 38. Die Fußmatten 38 sind aus einem Gummimaterial hergestellt und weisen ein rautenartiges (Stand-)Profil zur Verbesserung der Standsicherheit des Benutzers auf.

Wie in den Darstellungen der Fig. 2 und der Fig. 3 ersichtlich ist, weist die Stehplattform 4 an der Unterseite 8 zwei Hinterräder 40 auf. Die Hinterräder 40 weisen - wie insbesondere in den Darstellungen der Fig. 4 und der Fig. 5 ersichtlich - hierbei im Vergleich zu dem Vorderrad 20 einen reduzierten Raddurchmesser auf. Die Hinterräder 40 sind hierbei gegenüber dem Vorderrad 20 entlang der Abszissenachse X zur Hinterkante 16 hin versetzt an der Unterseite 8 positioniert. Die Hinterräder 40 sind weiterhin seitlich zur Mittelachse M entlang der Ordinatenachse Y versetzt angeordnet.

In dem dargestellten Ausführungsbeispiel ist das Vorderrad 20 beispielsweise mit einem pneumatischen Reifen ausgeführt, wobei die Hinterräder 40 insbesondere als Hartgummi-Räder ausgebildet sind.

Wie insbesondere in der Fig. 3 ersichtlich ist bilden das Vorderrad 20 und die Hinterräder 40 hierbei die Ecken eines gleichschenkeligen Dreiecks, wobei die Mittelachse M die Symmetrieachse des Dreiecks bildet. Die Schenkelseiten des Dreiecks, also die Verbindungslinie zwischen dem Vorderrad 20 und dem jeweiligen Hinterrad 40, bildet hierbei jeweils eine Kippachse K1, K2 um welche das Stehfahrzeug 2 umkippen kann.

Zur Verbesserung der Kippsicherheit und zur Reduzierung der Unfallgefahr weist das Stehfahrzeug 2 zwei als Stützräder ausgeführte Stützelemente 42 auf. Die im Wesentlichen frei schwenkbaren Stützräder 42 stehen hierbei der Unterseite 8 der Stehplattform 4 empor und sind seitlich flankierend zum Vorderrad 20 angeordnet. Wie insbesondere in der schematischen und vereinfachten Darstellung der Fig. 3 ersichtlich ist, sind die Stützräder 42 hierbei insbesondere jeweils seitlich außerhalb der jeweiligen Kipplinie K1 und K2 angeordnet. Mit anderen Worten sind die Stützräder 42 bezogen auf die Mittelachse M radial außerhalb der Kipplinien K1 und K2 angeordnet, sodass die Stehplattform 4 bei einer seitlichen Neigung zuverlässig seitlich abgestützt wird.

Das Vorderrad 20 und die beiden Hinterräder 40 tragen die Stehplattform 4 und befinden sich im Betrieb des Stehfahrzeugs 2 im Wesentlichen zu jedem Zeitpunkt in einem Berührungskontakt mit dem Untergrund 10. Die Stützräder 42 weisen eine im Vergleich zu dem Vorderrad 20 und den Hinterrädern 40 geringere axiale Höhe an der Unterseite 10 auf. Mit anderen Worten berühren die Stützräder 42 den Untergrund 10 im Wesentlichen nicht. Tritt ein gewisser Grad an seitlicher Neigung, bezogen auf die Abszissenachse X beziehungsweise auf die Mittelachse M, der Stehplattform 4 auf, wie es beispielsweise bei einer Kurvenfahrt des Stehfahrzeugs 2 möglich ist, berührt das Stützrad 42 an der geneigten Stehplattformseite, also an der der Kurve zugewandten Längsseite 12, den Untergrund 10. Dadurch wird die Stehplattform seitlich abgestützt und vor einem Umkippen entlang der Kipplinien K1 beziehungsweise K2 zuverlässig geschützt.

In der schematischen und vereinfachten Seitendarstellung der Fig. 5 ist die Verschwenkbarkeit oder Kippbarkeit der Lenkerstange 22 beziehungsweise des Haltearms 34 um eine parallel zur Ordinatenachse Y orientierte Schwenkachse der Halterung 26 mittels eines Doppelpfeils 44 schematisch dargestellt. Wie in der Seitendarstellung ersichtlich ist, ist die Lenkerstange 22 in der aufrechten Position etwa parallel zur Applikatenachse Z und weist gegenüber der Stehplattform 4 einen spitzen Neigungswinkel 46, also einen Winkel kleiner 90°, auf.

Die Verschwenkbarkeit um die durch die Lenkerstange 22 realisierte Drehachse D ist in der Fig. 5 mittels zweier gebogener Pfeile 48 gezeigt. Die Pfeile 48 sind nachfolgend hierbei auch als Verschwenkwinkel oder Lenkwinkel bezeichnet. Das Vorderrad 20 ist hierbei insbesondere um 360° um die Drehachse D herum verschwenkbar. Mit anderen Worten ist die Lenkerstange 22 derart am Haltearm 34 befestigt, dass eine Vollwinkel-Drehung der Lenkerstange 22 und somit des Vorderrads 20 möglich ist. Dies bedeutet, dass mit dem Lenker 24 ein im Wesentlichen unbegrenzter Lenkwinkel 48 für das Vorderrad 20 realisierbar ist, sodass das Stehfahrzeug 2 besonders wendig ist.

Das vorstehend beschriebene Stehfahrzeug 2 ist insbesondere zur Durchführung eines erfindungsgemäßen Verfahrens geeignet und eingerichtet. Das nachfolgend beschriebene Verfahren ist jedoch auch auf andersartige Stehfahrzeuge übertragbar und wird als eigenständige Erfindung angesehen.

Verfahrensgemäß wird hierbei der Lenkwinkel 48 des Vorderrads 20 um die Drehachse D, also um die Lenkerstange 22, erfasst. Hierzu sind beispielsweise Drehwinkelsensoren in die Lenkerstange 22 integriert. Verfahrensgemäß werden das Drehmoment und/oder die Drehzahl des Antriebsmotors 28, also die Motorleistung, zur Steuerung der Fahrzeuggeschwindigkeit in Abhängigkeit des erfassten Lenkwinkels 48 eingestellt. Dadurch ist eine lenkwinkelabhängige Begrenzung des Drehmoments und der Fahrzeuggeschwindigkeit realisiert. Bei einem zunehmend größeren Lenkwinkel 48 wird somit die Motorleistung und dadurch die Fahrzeuggeschwindigkeit sukzessive oder stufenweise reduziert.

Durch das Verfahren wird im Zuge eines Rückwärtsfahrens, bei welchem das Vorderrad 20 um 180° verschwenkt ist, automatisch auf ein niedriges Motordrehmoment gesteuert und/oder geregelt. Dadurch wird einem zu schnellen Anfahren oder Beschleunigen entgegengewirkt, wodurch der Benutzerkomfort sowie die Benutzersicherheit verbessert werden.

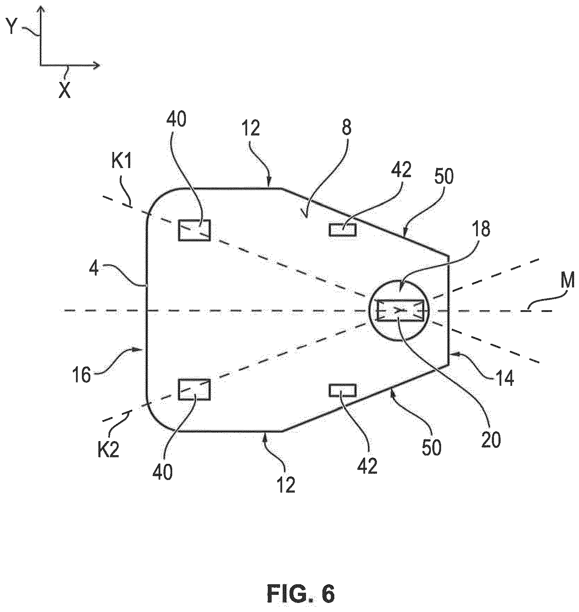

Die schematische und vereinfachte Draufsicht der Fig. 6 zeigt eine alternative Ausführungsform des Stehfahrzeugs 2. In dieser Ausführungsform weist die Stehplattform 4 eine etwa sechseckige Querschnittsform in der dargestellten XY-Ebene auf. Die Vorderkante 14 weist hierbei im Vergleich zur Hinterkante 16 eine verkürzte Seitenlänge auf. Die Vorderkante 14 mündet hierbei in zwei gegenüber der Mittelachse M beziehungsweise der Abszissenachse X geneigte Schrägkanten 50, welche von der Vorderkante 14 zur jeweiligen Seitenkante 12 verlaufen. Die Seitenkanten 12 verlaufen hierbei von der Hinterkante 16 bis etwa auf Höhe einer Fahrzeugmitte, welche zentral zwischen der Vorderkante 14 und der Hinterkante 16 entlang der Mittelachse M angeordnet ist, und gehen dort in die jeweiligen Schrägkanten 50 über. Dadurch weist das Stehfahrzeug 2 in dieser Ausführungsform eine schmälere, im Querschnitt etwa trapezförmige Fahrzeugvorderseite auf.

In diesem Ausführungsbeispiel sind die Stützräder oder Stützelemente 42 entlang der Mittelachse M zu den Hinterrädern 40 hin versetzt hinter dem Vorderrad 20 angeordnet. Die Stützelemente 42 sind hierbei weiterhin seitlich von der Mittelachse M versetzt und außerhalb der jeweiligen Kipplinie K1, K2 angeordnet. Durch diese Anordnung der Stützelemente 42 hinter dem Vorderrad 20 wird der Einsatz des Stehfahrzeugs 2 im Bereich von Stufen und Schwellen vorteilhaft vereinfacht, da somit bei einem Überfahren der Stufe oder der Schwelle zuerst das Vorderrad 20 an diese herangeführt wird.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen, soweit diese Kombinationen dem Schutzumfang der nachfolgenden Ansprüche entsprechen.

### Bezugszeichenliste

- 2: Stehfahrzeug
- 4: Stehplattform
- 6: Oberseite/Standfläche
- 8: Unterseite
- 10: Untergrund
- 12: Längsseite/Seitenkante
- 14: Querseite/Vorderkante/Vorderseite
- 16: Querseite/Hinterkante/Hinterseite
- 18: Durchführöffnung
- 20: Vorderrad
- 22: Lenkerstange
- 23: Radgabel
- 24: Lenker
- 26: Halterung
- 28: Antriebsmotor
- 30: Drehgriff
- 32: Befestigungsplatte
- 34: Haltearm
- 36: Fußpedal
- 38: Fußmatte
- 40: Hinterrad
- 42: Stützelement/Stützrad
- 44: Doppelpfeil
- 46: Neigungswinkel
- 48: Pfeil/Verschwenkwinkel/Lenkwinkel
- 50: Schrägkante

- M: Mittelachse
- D: Drehachse
- X: Abszissenachse
- Y: Ordinatenachse
- Z: Applikatenachse
- K1, K2: Kippachse

## Patentansprüche

1. Elektromotorisch angetriebenes Stehfahrzeug (2) für einen Personentransport, aufweisend einen elektrischen Antriebsmotor (28) und eine plattenförmige Stehplattform (4) mit einem entlang einer Mittelachse (M) der Stehplattform (4) angeordneten Vorderrad (20) mit einer daran gekoppelten Lenkerstange (22) mit einem Lenker (24) zum Verschwenken des Vorderrads (20) um eine durch die Lenkerstange (22) gebildeten Drehachse (D), und mit zwei zum Vorderrad (20) beabstandeten Hinterrädern (40), welche jeweils seitlich versetzt zur Mittelachse (M) angeordnet sind,
- wobei die Stehplattform (4) eine Oberseite (6) als Standfläche und eine dieser gegenüberliegend angeordnete und einem Untergrund (10) zugewandte Unterseite (8) aufweist,
- wobei eine umfangsseitig vollständig geschlossene, Durchführöffnung (18) in die Stehplattform (4) eingebracht ist, in welcher das Vorderrad (20) einsitzt,
- wobei das Vorderrad (20) beidseitig von jeweils mindestens einem Stützelement (42) flankiert ist, welches der Unterseite (8) der Stehplattform (4) emporsteht,
- wobei die Stützelemente (42) als Stützräder ausgebildet sind, **dadurch gekennzeichnet, dass**
die Stützelemente (42) und die Hinterräder (40) an der Unterseite (8) der Stehplattform (4) angeordnet sind.

2. Stehfahrzeug (2) nach Anspruch 1,
**dadurch gekennzeichnet,**
**dass** die Stützelemente (42) jeweils seitlich außerhalb einer zwischen dem Vorderrad (20) und dem jeweiligen Hinterrad (40) verlaufenden Kipplinie (K1, K2) an der Unterseite (8) positioniert sind.

3. Stehfahrzeug (2) nach einem der Ansprüche 1 bis 2,
**dadurch gekennzeichnet,**
**dass** die Stützelemente (42) entlang der Mittelachse (M) zu den Hinterrädern (40) hin versetzt hinter dem Vorderrad (20) angeordnet sind.

4. Stehfahrzeug (2) nach einem der Ansprüche 1 bis 3,
**dadurch gekennzeichnet,**
**dass** das Vorderrad (20) mittels des Antriebsmotors (28) angetrieben ist.

5. Stehfahrzeug (2) nach Anspruch 4,
**dadurch gekennzeichnet,**
**dass** der Antriebsmotor (28) als ein Radnabenmotor des Vorderrads (20) ausgebildet ist.

6. Stehfahrzeug (2) nach einem der Ansprüche 1 bis 5,
**dadurch gekennzeichnet,**
**dass** das, innerhalb der Durchgangsöffnung (18) angeordnete, Vorderrad (20) mittels des Lenkers (24) um 360° verschwenkbar ist.

7. Stehfahrzeug (2) nach einem der Ansprüche 1 bis 6,
**dadurch gekennzeichnet,**
**dass** eine Fahrzeugbatterie zur Energieversorgung des Antriebsmotors (28) in der Lenkerstange (22) integriert ist.

8. Stehfahrzeug (2) nach einem der Ansprüche 1 bis 7,
**dadurch gekennzeichnet,**
**dass** die Lenkerstange (22) verschwenkbar gegenüber der Stehplatte (4) ist.

9. Stehfahrzeug (2) nach einem der Ansprüche 1 bis 8,
**dadurch gekennzeichnet,**
**dass** die Stützelemente (42) frei schwenkbar sind.

10. Stehfahrzeug (2) nach einem der Ansprüche 1 bis 9,
**dadurch gekennzeichnet,**
**dass** der Raddurchmesser der Hinterräder (40) kleiner als der Raddurchmesser des Vorderrads (20) ist.

11. Stehfahrzeug (2) nach einem der Ansprüche 1 bis 10,
**dadurch gekennzeichnet,**
**dass** das in der Durchführöffnung (18) einsitzende Vorderrad (20) zumindest teilweise sowohl der Oberseite (6) als auch der Unterseite (8) der Stehplattform (4) emporsteht.

12. Stehfahrzeug (2) nach einem der Ansprüche 1 bis 11,
**dadurch gekennzeichnet,**
- **dass** ein Drehwinkelsensor zur Erfassung eines Verschwenkwinkels (48) des Vorderrads (20) in die Lenkerstange (22) integriert ist, und
- **dass** ein Controller vorgesehen ist, welcher ein Drehmoment des Antriebsmotors (28) zur Steuerung der Fahrzeuggeschwindigkeit in Abhängigkeit des erfassten Verschwenkwinkels (48) einstellt.

13. Verfahren zum Betrieb eines elektromotorischen Stehfahrzeugs (2) nach Anspruch 12,
- wobei ein Verschwenkwinkel (48) des Vorderrads (20) um eine Drehachse (D) erfasst wird, und
- wobei ein Drehmoment und/oder die Drehzahl eines Antriebmotors (28) zur Steuerung der Fahrzeuggeschwindigkeit in Abhängigkeit des erfassten Verschwenkwinkels (48) eingestellt werden,
**dadurch gekennzeichnet,**
**dass** bei einem Rückwärtsfahren, bei welchem das Vorderrad um 180° verschwenkt ist, automatisch auf ein niedriges Drehmoment des Antriebsmotors (28) gesteuert und/oder geregelt wird.

## Claims

1. Standing vehicle (2) which is driven by electric motor for personal transport, having an electric drive motor (28) and a plate-shaped standing platform (4) with a front wheel (20), which is arranged along a centre axis (M) of the standing platform (4), with a handlebar rod (22), which is coupled to the said front wheel (20), with a handlebar (24) for pivoting the front wheel (20) about a rotational axis (D) which is formed by way of the handlebar rod (22), and with two rear wheels (40) which are spaced apart from the front wheel (20) and are arranged in each case offset laterally with respect to the centre axis (M),
- the standing platform (4) having an upper side (6) as standing area and a lower side (8) which is arranged opposite the said upper side (6) and faces an underlying surface (10),
- a passage opening (18) which is closed completely on the circumferential side being made in the standing platform (4), in which the front wheel (20) is seated,
- the front wheel (20) being flanked on both sides by in each case at least one supporting element (42) which rises up from the lower side (8) of the standing platform (4),
- the supporting elements (42) being configured as supporting wheels,
**characterized in that**
the supporting elements (42) and the rear wheels (40) are arranged on the lower side (8) of the standing platform (4) .

2. Standing vehicle (2) according to Claim 1,
**characterized**
**in that** the supporting elements (42) are positioned on the lower side (8) in each case laterally outside a tilting line (K1, K2) which runs between the front wheel (20) and the respective rear wheel (40).

3. Standing vehicle (2) according to either of Claims 1 and 2,
**characterized**
**in that** the supporting elements (42) are arranged behind the front wheel (20) in a manner which is offset along the centre axis (M) towards the rear wheels (40).

4. Standing vehicle (2) according to one of Claims 1 to 3,
**characterized**
**in that** the front wheel (20) is driven by means of the drive motor (28).

5. Standing vehicle (2) according to Claim 4,
**characterized**
**in that** the drive motor (28) is configured as a wheel hub motor of the front wheel (20).

6. Standing vehicle (2) according to one of Claims 1 to 5,
**characterized**
**in that** the front wheel (20) which is arranged within the through opening (18) can be pivoted by 360° by means of the handlebar (24).

7. Standing vehicle (2) according to one of Claims 1 to 6,
**characterized**
**in that** a vehicle battery for the power supply of the drive motor (28) is integrated into the handlebar rod (22) .

8. Standing vehicle (2) according to one of Claims 1 to 7,
**characterized**
**in that** the handlebar rod (22) can be pivoted with respect to the standing plate (4).

9. Standing vehicle (2) according to one of Claims 1 to 8,
**characterized**
**in that** the supporting elements (42) can be pivoted freely.

10. Standing vehicle (2) according to one of Claims 1 to 9,
**characterized**
**in that** the wheel diameter of the rear wheels (40) is smaller than the wheel diameter of the front wheel (20).

11. Standing vehicle (2) according to one of Claims 1 to 10,
**characterized**
**in that** the front wheel (20) which is seated in the passage opening (18) rises up at least partially from the upper side (6) and from the lower side (8) of the standing platform (4).

12. Standing vehicle (2) according to one of Claims 1 to 11,
**characterized**
- **in that** a rotary angle sensor for the detection of a pivoting angle (48) of the front wheel (20) is integrated into the handlebar rod (22), and
- **in that** a controller is provided which sets a torque of the drive motor (28) for controlling the vehicle speed in a manner which is dependent on the detected pivoting angle (48).

13. Method for operating an electric-motor standing vehicle (2) according to Claim 12,
- a pivoting angle (48) of the front wheel (20) about a rotational axis (D) being detected, and
- a torque and/or the rotational speed of a drive motor (28) being set for controlling the vehicle speed in a manner which is dependent on the detected pivoting angle (48),
**characterized**
**in that**, in the case of reverse driving, in the case of which the front wheel is pivoted by 180°, a control and/or regulation operation is automatically carried out to a low torque of the drive motor (28).

## Revendications

1. Transporteur personnel (2) à entraînement par moteur électrique, destiné au transport d'une personne, présentant un moteur d'entraînement électrique (28) et une plate-forme pour station debout (4) en forme de plaque, comprenant une roue avant (20) disposée le long d'un axe médian (M) de la plate-forme pour station debout (4) dotée d'une barre de guidon (22) couplée à celle-ci avec un guidon (24) pour faire pivoter la roue avant (20) autour d'un axe de rotation (D) formé par la barre de guidon (22), et comprenant deux roues arrière (40) espacées par rapport à la roue avant (20) et qui sont disposées respectivement de manière latéralement décalée par rapport à l'axe médian (M),
- la plate-forme pour station debout (4) présentant une face supérieure (6) en tant que surface de station debout et une face inférieure (8) disposée à l'opposé de celle-ci et tournée vers le sol (10),
- une ouverture de passage (18) entièrement fermée côté circonférence étant pratiquée dans la plate-forme pour station debout (4), dans laquelle vient se loger la roue avant (20),
- la roue avant (20) étant flanquée des deux côtés respectivement d'un élément de support (42) faisant saillie à partir de la face inférieure (8) de la plate-forme pour station debout (4),
- les éléments de support (42) étant réalisés sous la forme de roues de support,
**caractérisé en ce que** les éléments de support (42) et les roues arrière (40) sont disposés sur la face inférieure (8) de la plate-forme pour station debout (4) .

2. Transporteur personnel (2) selon la revendication 1, **caractérisé en ce que** les éléments de support (42) sont positionnés sur la face inférieure (8) respectivement latéralement à l'extérieur d'une ligne de basculement (K1, K2) s'étendant entre la roue avant (20) et la roue arrière respective (40).

3. Transporteur personnel (2) selon l'une quelconque des revendications 1 à 2, **caractérisé en ce que** les éléments de support (42) sont disposés le long de l'axe médian (M) en direction des roues arrière (40) en décalage derrière la roue avant (20).

4. Transporteur personnel (2) selon l'une quelconque des revendications 1 à 3, **caractérisé en ce que** la roue avant (20) est entraînée au moyen du moteur d'entraînement (28).

5. Transporteur personnel (2) selon la revendication 4, **caractérisé en ce que** le moteur d'entraînement (28) est réalisé sous la forme d'un moteur sur moyeu de roue de la roue avant (20).

6. Transporteur personnel (2) selon l'une quelconque des revendications 1 à 5, **caractérisé en ce que** la roue avant (20), disposée à l'intérieur de l'ouverture de passage (18), peut être amenée à pivoter sur 360° au moyen du guidon (24).

7. Transporteur personnel (2) selon l'une quelconque des revendications 1 à 6, **caractérisé en ce qu'**une batterie de véhicule pour l'alimentation en énergie du moteur d'entraînement (28) est intégrée dans la barre de guidon (22).

8. Transporteur personnel (2) selon l'une quelconque des revendications 1 à 7, **caractérisé en ce que** la barre de guidon (22) est pivotante par rapport à la plaque de station de debout (4).

9. Transporteur personnel (2) selon l'une quelconque des revendications 1 à 8, **caractérisé en ce que** les éléments de support (42) pivotent librement.

10. Transporteur personnel (2) selon l'une quelconque des revendications 1 à 9, **caractérisé en ce que** le diamètre de roue des roues arrière (40) est inférieur au diamètre de roue de la roue avant (20).

11. Transporteur personnel (2) selon l'une quelconque des revendications 1 à 10, **caractérisé en ce que** la roue avant (20) logée dans l'ouverture de passage (18) fait saillie au moins en partie à la fois à partir de la face supérieure (6) et de la face inférieure (8) de la plate-forme pour station debout (4).

12. Transporteur personnel (2) selon l'une quelconque des revendications 1 à 11, **caractérisé**
- **en ce qu'**un capteur d'angle de rotation est intégré dans la barre de guidon (22) pour détecter un angle de pivotement (48) de la roue avant (20), et
- **en ce qu'**un contrôleur est prévu qui règle un couple du moteur d'entraînement (28) pour commander la vitesse de véhicule en fonction de l'angle de pivotement (48) détecté.

13. Procédé d'exploitation d'un transporteur personnel (2) à moteur électrique selon la revendication 12,
- dans lequel un angle de pivotement (48) de la roue avant (20) autour d'un axe de rotation (D) est détecté, et
- dans lequel un couple et/ou la vitesse de rotation du moteur d'entraînement (28) pour commander la vitesse de véhicule sont réglés en fonction de l'angle de pivotement (48) détecté,
**caractérisé en ce qu'**en marche arrière, lorsque la roue avant pivote sur 180°, un couple inférieur du moteur d'entraînement (28) est automatiquement commandé et/ou régulé.
